# EUROPEAN PATENT APPLICATION

(11) **EP 2 259 655 A1**
(43) Date of publication of application: **08.12.2010**
(21) Application number: 09724021.2
(22) Date of filing: 24.03.2009
(51) Int. Cl.: H04W 88/02, H04W 48/02, H04W 48/16

(54) **MOBILE STATION**

(30) Priority: 24.03.2008 JP 2008076877
(71) Applicant: NTT DOCOMO, INC., Tokyo 100-6150 (JP)
(72) Inventor: IWAMURA, Mikio, Chiyoda-ku, Tokyo 100-6150 (JP)
(74) Representative: HOFFMANN EITLE
(86) International application number: PCT/JP2009/055800
(87) International publication number: WO 2009/119567

(57) **Abstract**

A mobile station comprises an access right management section configured so as to manage the CSG-ID corresponding to a CSG cell which permits access to the mobile station, a measurement section configured so as to measure the radio quality in peripheral cells, and a display section configured so as to display at least the CSG cell corresponding to the CSG-ID managed by the access right management section for each frequency out of the peripheral cells the radio quality of which has been measured by the measurement section on a screen as an available CSG cell.

## Description

### TECHNICAL FIELD

The present invention relates to a mobile station which is capable of displaying access restricted cells on its screen, and is also capable of selecting an access restricted cell selected by a user among the access restricted cells displayed on the screen, as a cell for standby, the access restricted cells being settable to accept access only from particular mobile stations.

### BACKGROUND ART

There is known a mobile communication system in which CSG cells (access restricted cells) settable to accept access only from particular mobile stations (a particular user group, that is, CSG: Closed Subscriber Group) can be deployed in a home, an office and the like.

Furthermore, 3GPP has agreed to a requirement that a mobile station UE supports "Manual CSG Selection."

According to "Manual CSG Selection" mentioned above, a mobile station UE displays a list of available CSG cells in neighbourhood (list of CSG-IDs) on its screen in response to a certain operation by a user on the mobile station UE, and then selects a CSG cell selected by the user, as a cell for standby, among the CSG cells displayed on the screen.

In "Manual CSG Selection" described above, however, definition of the available CSG cells in neighbourhood is so unclear that a problem in a viewpoint of a radio quality may occur when a mobile station UE displays a list of all the detectable CSG cells (list of CSG-IDs) on its screen so as to allow a user to select one of the CSG cells.

For example, when a user selects a CSG cell not having the best radio quality among cells having a certain frequency, there have been problems that the selected cell may interfere with another cell or that another cell may interfere with the selected cell.

### DISCLOSURE OF THE INTENTION

The present invention has been made to address the above problems, and the object of the present invention is to provide a mobile station capable of achieving "Manual CSG Selection" mentioned above without causing a cell to interfere with another cell and without causing another cell to interfere the cell.

A first aspect of the present invention is summarized as a mobile station capable of displaying access restricted cells on a screen thereof, and selecting an access restricted cell selected by a user among the access restricted cells displayed on the screen as a cell for standby, the access restricted cells being settable to accept access only from a particular mobile station, the mobile station comprise an access right manager configured to manage an access accepting access from the mobile station, a measurement unit configured to measure radio qualities of neighbour cells and a display unit configured to display, as an available CSG cell on a frequency basis on the screen, at least either a cell having a radio quality within a predetermined range with respect to the radio quality of a cell that has the best radio quality among the neighbour cells whose radio qualities are measured by the measurement unit, or the access restricted cell corresponding to the access restricted group ID managed by the access right manager.

In the first aspect, wherein the display unit displays the access restricted cell as the available CSG cell on the frequency basis on the screen, the access restricted cell having the radio quality within the predetermined range with respect to the radio quality of the cell having the best radio quality among the neighbour cells whose radio qualities are measured by the measurement unit, and corresponding to the access restricted group ID managed by the access right manager.

In the first aspect, wherein the predetermined range is notified by a radio base station.

In the first aspect, wherein the predetermined range is a defined value.

In the first aspect, wherein the predetermined range is included in broadcast information sent by a radio base station and is acquired from the broadcast information.

A second aspect of the present invention is summarized as a radio base station configured to notify a mobile station of a predetermined range indicating a range of a radio quality of a cell to be displayed on a frequency basis on a screen of the mobile station, among neighbour cells whose radio qualities are measured by the mobile station.

In the second aspect, wherein the radio base station sends the predetermined range included in broadcast information.

### BRIEF DESCRIPTION OF THE DRAWINGS

[FIG. 1] FIG. 1 is an overall configurational view of a mobile communication system according to a first embodiment of the present invention.
[FIG. 2] FIG. 2 is a functional block diagram of a mobile station according to the first embodiment of the present invention.
[FIG. 3] FIG. 3 is a diagram showing an example of radio qualities of neighbour cells measured by the mobile station according to the first embodiment of the present invention.,
[FIG. 4] FIG. 4 is an example of "available CSG cells" displayed on a screen of the mobile station according to the first embodiment of the present invention.
[FIG. 5] FIG. 5 is a flowchart showing operations of the mobile station according to the first embodiment of the present invention.

### BEST MODE FOR CARRYING OUT THE INVENTION

### (Configuration of Mobile Communication System According to First Embodiment of the Present Invention)

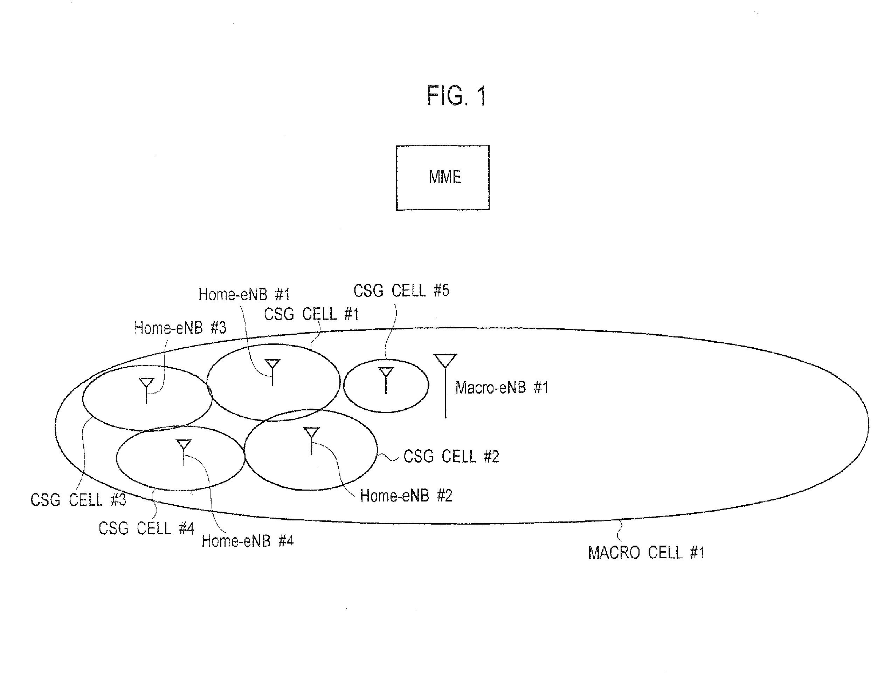

A configuration of a mobile communication system according to a first embodiment of the present invention will be described with reference to FIG. 1 to FIG. 4. Note that, the description will be given in the present embodiment taking as an example a mobile communication system to which the LTE (Long Term Evolution) scheme is applied. However, the present invention is not limited to the example of this mobile communication system.

As shown in FIG. 1, the mobile communication system according to the present embodiment includes an upper node such as an exchange MME, a macro radio base station Macro-eNB #1, and multiple home radio base stations Home-eNB #1 to #4.

A macro cell #1 is managed by the macro radio base station Macro-eNB #1; A CSG cell #1 is managed by the home radio base station Home-eNB #1; A CSG cell #2 is managed by the home radio base station Home-eNB #2; A CSG cell #3 is managed by the home radio base station Home-eNB #3; A CSG cell #4 is managed by the home radio base station Home-eNB #4.

Here, the CSG cells #1 to #4 are access restricted cells settable to accept access only from particular mobile stations.

Moreover, the multiple home radio base stations Home-eNB #1 to #4 are each configured to make a notification of a CSG-ID (or may be called a TA-ID: Tracking Area-ID) in a corresponding one of the CSG cells #1 to #4. In this respect, the multiple home radio base stations Home-eNB #1 to #4 may be configured to make notifications of a common CSG-ID in multiple CSG cells.

In addition, the multiple home radio base stations Home-eNB #1 to #4 are each configured to notify a mobile station UE of a predetermined range indicating a range of a radio quality of a cell to be displayed on a screen on a frequency basis, among neighbour cells whose radio qualities are measured by the mobile station UE.

In this respect, the multiple home radio base stations Home-eNB #1 to #4 may be configured to send the predetermined range by including the predetermined range into broadcast information.

The mobile station UE is capable of performing processing to register its location in one TA or more. Specifically, the mobile station UE is configured to perform processing to register its location in one TA or more by sending the exchange MME a TAU (Tracking Area Update) which specifies a TA-ID (including a CSG-ID).

Note that the mobile station UE is capable of performing standby in a macro cell and in a CSG cell accepting access only from the mobile station UE.

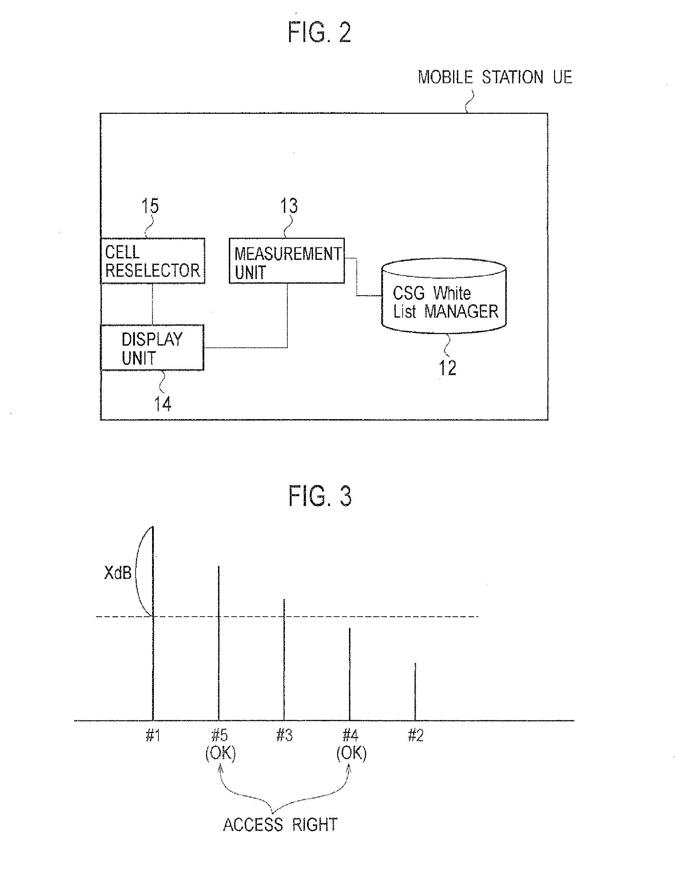

As shown in FIG. 2, the mobile station UE includes a CSG White List manager 12, a measurement unit 13, a display unit 14, and a cell reselector 15.

The CSG White List manager 12 is configured to manage CSG-IDs (access restricted group IDs) associated with CSG cells (access restricted cells) accepting only from the mobile station UE.

For example, the CSG White List manager 12 may be provided in a USIM (User Subscriber Identity Meddle).

Specifically, the CSG White List manager 12 is configured to store and manage a list of the CSG-IDs associated with the CSG cells accepting access only from the mobile station UE, as a "CSG White List."

The measurement unit 13 is configured to measure radio qualities of neighbour cells. In this respect, the neighbour cells may include the cell in which the mobile station UE is currently in standby mode, cells belonging to different frequencies or different systems, and cells searched out or detected by the measurement unit 13.

The display unit 14 is configured to display at least one of the following groups of cells on the screen on a frequency basis as CSG cells selectable by a user. One of the groups includes cells with radio qualities which fall within a predetermined range with respect to the radio quality of a cell which has the best radio quality among the neighbour cells whose radio qualities (RSRP: Reference Signal Received Power, for example) are measured by the measurement unit 13; the other one of the groups includes CSG cells corresponding to the CSG-IDs managed by the CSG White List manager 12 (assumable CSG cells accepting access only from the mobile station UE).

For example, the display unit 14 may be configured to display the following CSG cells on the screen on the frequency basis as CSG cells selectable by a user. Specifically, the CSG cells have the radio qualities which fall within a predetermined range with respect to the radio quality of a cell which has the best radio quality among the neighbour cells whose radio qualities (RSRP: Reference Signal Received Power, for example) are measured by the measurement unit 13, and the CSG cells also correspond to the COG-IDES managed by the CSG White List manager 12 (assumable CSG cells accepting access only from the mobile station UE).

In an example shown in FIG. 3, the CSG cell #1 is a cell with the best radio quality among CSG cells #1 to #5 whose radio qualities are measured by the measurement unit 13.

In addition, in the example shown in FIG. 3, the CSG cells #3 and #5 are CSG cells with the radio qualities which fall within a predetermined range (within X dB) with respect to the radio quality of the CSG cell #1 (the best radio quality).

Further, in the example shown in FIG. 3, the CSG cells #4 and #5 are CSG cells corresponding to the CSG-IDs managed by the CSG White List manager 12 (assumable CSG cells accepting access only from the mobile station UE).

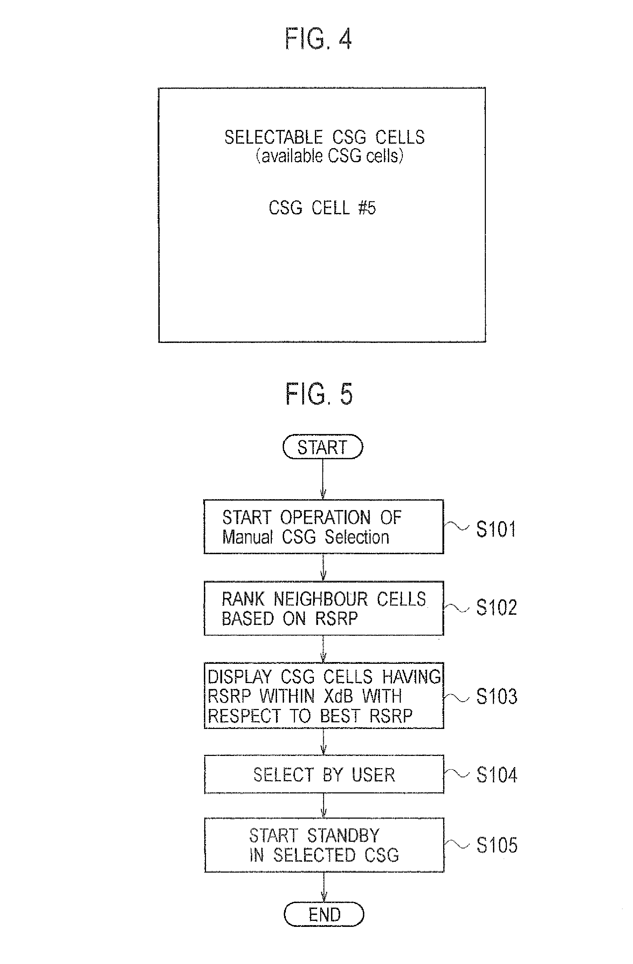

Thus, in the example shown in FIG. 3, the display unit 14 is configured to display only the CSG cell #5 on the screen as the CSG cell selectable by a user. FIG. 4 shows an example of what is displayed on the screen by the display unit 14 at this time.

Meanwhile, in the example shown in FIG. 3, if the predetermined range is "0 dB," a CSG cell with the radio quality falling within a predetermined range with respect to the radio quality of the CSG cell #1 (the best radio quality) is the CSG cell #1 with the best radio quality.

Note that the display unit 14 may be configured to display the following cells on the screen on the frequency basis as CSG cells selectable by a user. Specifically, the displayed cells are ones other than the CSG cells corresponding to the CSG-IDs managed by the CSG White List manager 12 (assumable CSG cells accepting access only from the mobile station UE), among the neighbour cells whose radio qualities (RSRP: Reference Signal Received Power, for example) are measured by the measurement unit 13.

Moreover, the CSG White List manager 12 may be configured to update CSG-IDs (access restricted group IDs) associated with the CSG cells (access restricted cells) accepting access only from the mobile station UE, depending on the neighbour cells whose radio qualities (RSRP: Reference Signal Received Power, for example) are measured by the measurement unit 13.

In this respect, the predetermined range mentioned above may be configured so as to be informed by each home radio base station Home-eNB, or may be a value defined by each mobile station UE.

Alternatively, the predetermined range mentioned above may be configured to be included in broadcast information sent by the radio base station Home-eNB and thus to allow the mobile station UE to acquire the predetermined range via the broadcast information.

The cell reselector 15 is configured to select a CSG selected by a user among the CSG cells displayed on the screen, as a cell for standby.

Note that there is a case where, among the cells whose radio qualities are measured by the measurement unit 13, the cell with the best radio quality is a cell to which no CSG (access right restriction) is set.

Even in this case, only the following CSG cells are displayed on the screen on the frequency basis as the CSG cells selectable by a user, the CSG cells corresponding to the CSG-IDs managed by the CSG White List manager 12 and belonging to the neighbour cells with the radio qualities falling within a predetermined range with respect to the radio quality of the cell which has the best radio quality.

Note that in a case where there is a cell to which no CSG (access right restriction) is set among the neighbour cells whose radio qualities fall within the predetermined range with respect to the radio quality of the cell which has the best radio quality, the display unit 14 may display a network name (operator name) of the relevant cell on the screen as a network selectable by a user.

At this time, the display unit 14 may alternatively display only network names of operators with which a user establishes a contract on the mobile station UE or of operators with which a user establishes a roaming contract on the mobile station DE.

### (Operations of Mobile Communication System According to First Embodiment of the Present Invention)

Operations of the mobile station UE according to the first embodiment of the present invention will be described with reference to the FIG. 5.

As shown in FIG. 5, a user performs a start operation of "Manual CSG Selection" on a mobile station UE in Step S101.

In Step S102, the mobile station UE measures radio qualities (RSRP) of neighbour cells and thus ranks the neighbour cells in accordance with the measurement results.

In Step S103, the mobile station UE displays on its screen CSG cells with radio qualities (RSRP) which fall within a predetermined range (within X dB) with respect to a radio quality (RSRP) of a cell with the best radio quality (RSRP), as available CSG cells.

When the user selects one of the CSG cells displayed on the screen in Step S104, the mobile station UE starts standby in the selected CSG in Step S105.

### (Advantageous Effect of Mobile Communication System According to First Embodiment of the Present Invention)

In the mobile communication system according to the first embodiment of the present invention, a mobile station UE is configured to display CSG cells with radio qualities (RSRP) which fall within a predetermined range (within X dB) with respect to the best radio quality (RSRP), on its screen as available CSG cells so as to allow the user to select any of the CSG cells. Accordingly, the mobile communication system according to the first embodiment of the present invention is capable of achieving "Manual CSG Selection" while making the selected cell less likely to interfere with another cell or making another cell with the selected cell.

### (Modification)

Note that operation of the above described mobile station UE, a macro radio base station Macro-eNB and multiple home radio base stations Home-eNB may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE, a macro radio base station Macro-eNB and multiple home radio base stations Home-eNB. Also, the storage medium and the processor may be provided in the mobile station UE, a macro radio base station Macro-eNB and multiple home radio base stations Home-eNB as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

### INDUSTRIAL APPLICABILITY

As described above, the present invention can provide a mobile station capable of achieving "Manual CSG Selection" mentioned above without causing a cell to interfere with another cell and without causing another cell to interfere the cell.

## Claims

1. A mobile station capable of displaying access restricted cells on a screen thereof, and selecting an access restricted cell selected by a user among the access restricted cells displayed on the screen as a cell for standby, the access restricted cells being settable to accept access only from a particular mobile station, the mobile station comprising:
an access right manager configured to manage an access accepting access from the mobile station;
a measurement unit configured to measure radio qualities of neighbour cells; and
a display unit configured to display, as an available CSG cell on a frequency basis on the screen, at least either a cell having a radio quality within a predetermined range with respect to the radio quality of a cell that has the best radio quality among the neighbour cells whose radio qualities are measured by the measurement unit, or the access restricted cell corresponding to the access restricted group ID managed by the access right manager.

2. The mobile station according to claim 1 wherein the display unit displays the access restricted cell as the available CSG cell on the frequency basis on the screen, the access restricted cell having the radio quality within the predetermined range with respect to the radio quality of the cell having the best radio quality among the neighbour cells whose radio qualities are measured by the measurement unit, and corresponding to the access restricted group ID managed by the access right manager.

3. The mobile station according to claim 2, wherein the predetermined range is notified by a radio base station.

4. The mobile station according to claim 2, wherein the predetermined range is a defined value.

5. The mobile station according to claim 2, wherein the predetermined range is included in broadcast information sent by a radio base station and is acquired from the broadcast information.

6. A radio base station configured to notify a mobile station of a predetermined range indicating a range of a radio quality of a cell to be displayed on a frequency basis on a screen of the mobile station, among neighbour cells whose radio qualities are measured by the mobile station.

7. The radio base station according to claim 6, wherein the radio base station sends the predetermined range included in broadcast information.
